# EUROPÄISCHE PATENTSCHRIFT

(11) **EP 1 572 519 B1**
(45) Veröffentlichungstag und Bekanntmachung des Hinweises auf die Patenterteilung: **20.09.2006**
(21) Anmeldenummer: 03813088.6
(22) Anmeldetag: 14.10.2003
(51) Int. Cl.: B62D 1/10, B62D 1/16

(54) **LENKSÄULENANORDNUNG**
STEERING COLUMN ARRANGEMENT
ENSEMBLE COLONNE DE DIRECTION

(30) Priorität: 18.12.2002 DE 10259167
(43) Veröffentlichungstag der Anmeldung: 14.09.2005
(60) Teilanmeldung: 05027431.5
(73) Patentinhaber: DaimlerChrysler AG, 70567 Stuttgart (DE)
(72) Erfinder: HEBENSTREIT, Axel, 70193 Stuttgart (DE); LÖFFLER, Hans-Dieter, 72766 Reutlingen (DE); MAUCH, Markus, 73773 Aichwald (DE)
(86) Internationale Anmeldenummer: PCT/EP2003/011332
(87) Internationale Veröffentlichungsnummer: WO 2004/054868

(56) Entgegenhaltungen:
- EP-A- 0 831 008
- DE-A- 19 700 175
- DE-C- 3 940 391
- DE-C- 10 205 270
- US-B1- 6 318 756

## Beschreibung

Die Erfindung betrifft eine Lenksäulenanordnung gemäß dem Oberbegriff des Patentanspruchs 1.

Aus der DE 197 00 175 A1 ist eine Lenksäulenanordnung bekannt, die eine drehbeweglich in einem Mantelrohr gelagerte Lenkspindel umfasst. An dem in den Fahrzeuginnenraum hineinragenden Ende der Lenkspindel ist ein Schaltermodul auf dem Mantelrohr radial und axial festgelegt, so dass es bezüglich der Lenkspindel unbeweglich gehalten ist. Dazu stützt sich das Schaltermodul auf einem auf der Lenkspindel angeordneten Lager ab.

Die axiale Sicherung des Schaltermoduls auf dem Mantelrohr erfolgt über einen Bajonettverschluss, während die radiale Festlegung über eine Schelle erfolgt, die das Mantelrohr umgreift.

Die Montage des Schaltermoduls erfordert somit zwei Verfahrensschritte. Schon geringe Toleranzabweichungen der Bauteile können bei der Montage dazu führen, dass Kontakte von im Schaltermodul integrierten elektronischen Bauelementen, wie beispielsweise ein Lenkwinkelsensor, nicht korrekt mit dem Lenkrad verbunden werden können.

Es ist Aufgabe der Erfindung, eine Lenksäulenanordnung zu schaffen, die die Montage eines Schaltermoduls vereinfacht und einen zuverlässigen Anschluss des Schaltermoduls an das Lenkrad gewährleistet.

Die Aufgabe wird erfindungsgemäß mit den Merkmalen des Patentanspruchs 1 gelöst.

Eine Lenksäulenanordnung umfasst eine drehbeweglich in einem Mantelrohr gelagerte Lenkspindel und ein gegenüber der Lenkspindel unbeweglich gehaltenes, auf dem Mantelrohr befestigtes Schaltermodul. Das Schaltermodul ist erfindungsgemäß mit einer Zentriereinrichtung und einem Lager ausgerüstet, wobei sich das Schaltermodul über das Lager auf der Lenkspindel abstützt. Durch Einwirkung einer koaxial zur Längsachse der Lenkspindel gerichteten Kraft auf die Zentriereinrichtung wird es ermöglicht, dass das Schaltermodul bei der Montage in axialer Richtung bis in eine Endlage bewegt wird und sich dabei selbsttätig radial ausrichtet. Von Vorteil dabei ist, dass nur ein Verfahrensschritt, nämlich das Aufbringen einer koaxial wirkenden Kraft, ausreicht, um das Schaltermodul an dem Mantelrohr zu befestigen. Gleichzeitig wird durch das Aufbringen der axialen Kraft das Schaltermodul an das Lenkrad gezogen, so dass keine axiale Bewegung zwischen Schaltermodul und Lenkrad erfolgen kann. Hinzu kommt, dass ein Verdrehen oder Verkanten des Schaltermoduls nahezu ausgeschlossen werden kann, so dass damit der beispielsweise im Schaltermodul integrierte Lenkwinkelsensor fehlerfrei montiert ist.

Weitere vorteilhafte Ausgestaltungen ergeben sich aus den Unteransprüchen.

In einer Ausgestaltungsform umfasst die Zentriereinrichtung einen Stator und Klemmbacken, die beim Aufbringen der axialen Kraft derart zusammenwirken, dass sich das Schaltermodul selbsttätig auf dem Mantelrohr zentriert.

Für die Abstützung des Schaltermoduls auf der Lenkspindel kann der Stator mit dem Lager verbunden sein, so dass das Schaltermodul bei Drehung des Lenkrades unbeweglich gehalten ist.

Zur gleichmäßigen Einleitung der axial wirkenden Kraft auf die Klemmbacken kann der Stator in einer bevorzugten Ausführungsform über ein Federelement mit jeder Klemmbacke verbunden sein.

Da jede Klemmbacke mit einem Auflager an dem Mantelrohr festgezogen wird, kann beim Einwirken der axialen Kraft eine axiale Sicherung des Schaltermoduls auf dem Mantelrohr erfolgen.

Die dem Stator zugewandte Fläche der Klemmbacke verläuft vorteilhafterweise schräg bezüglich der Längsachse der Lenkspindel, so dass der gegenläufig zur Klemmbacke bewegte Stator eine Anlage der Klemmbacke an das Mantelrohr bewirkt.

Diese Wirkung kann verstärkt werden, wenn die Innenfläche des Stators parallel zur schrägen Fläche der Klemmbacke verläuft.

In Abhängigkeit der wirkenden Kraft kann bei der Montage eine an der dem Mantelrohr zugewandten Fläche der Klemmbacke abstehende Erhebung mehr oder weniger stark in das Mantelrohr gepresst werden, so dass ein sicherer Halt des Schaltermoduls auf dem Mantelrohr gewährleistet ist.

Vorteilhafterweise kann die axiale Kraft mittels einer Lenkradschraube aufgebracht werden. Das hat den Vorteil, dass mit einem ohnehin notwendigen Verfahrensschritt, nämlich dem festlegen des Lenkrads an der Lenkspindel, gleichzeitig das Schaltermodul festgelegt werden kann.

Als radiale Sicherung des Schaltermoduls, die gleichzeitig während der Montage als Verliersicherung dienen kann, ist eine Biegefeder am Stator vorgesehen, die in eine Aussparung des Mantelrohrs eingreift.

Eine bevorzugte Ausgestaltungsform wird im folgenden anhand der Zeichnung erläutert. Dabei zeigen:
- Fig. 1a: einen Längsschnitt durch eine Lenksäulenanordnung,
- Fig. 1b: eine Detaildarstellung nach Fig. 1
- Fig. 2: eine vergrößerte Darstellung gemäß Fig.1,
- Fig. 3a: eine Einzeldarstellung einer Biegefeder,
- Fig. 3b: eine Einzeldarstellung einer Aussparung.

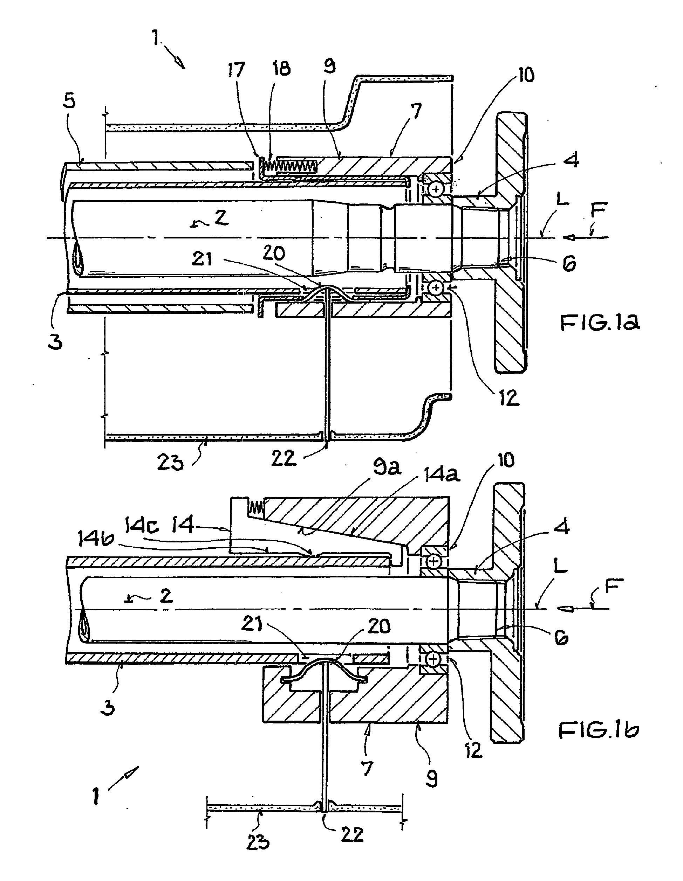

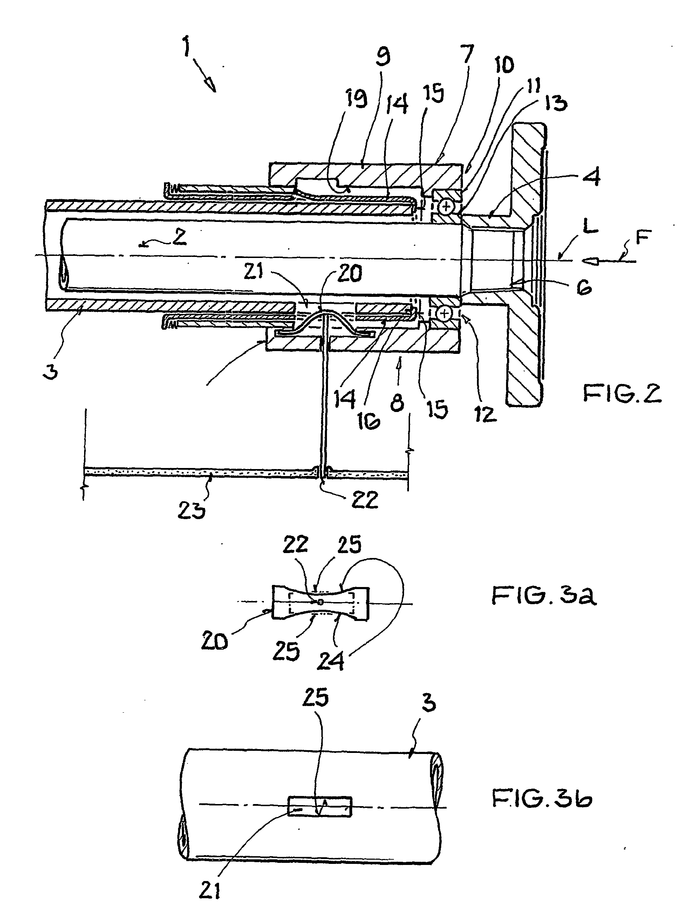

In den Fig. 1 und 2 ist eine Lenksäulenanordnung 1 mit einer Lenkspindel 2 und einem koaxial zur Lenkspindel 2 angeordneten, inneren Mantelrohr 3 in einem Längsschnitt dargestellt. Für eine Komfortverstellung eines Lenkrades, von dem hier nur eine Lenkradnabe 4 dargestellt ist, ist ein äußeres Mantelrohr 5 vorgesehen, wobei das äußere Mantelrohr 5 relativbeweglich zum inneren Mantelrohr 3 gelagert ist.

Die Lenkradnabe 4 ist koaxial zur Lenkspindel 2 auf deren, dem Fahrzeuginnenraum zugewandten Ende 6 aufgesteckt. Das Ende 6 der Lenkspindel 2 ist mit einer geraden Außenverzahnung versehen, die in eine korrespondierende Innenverzahnung der Lenkradnabe 4 eingreift, so dass eine Drehbewegung des Lenkrades auf die Lenkspindel 2 übertragen werden kann.

Auf dem inneren Mantelrohr 3 ist ein Schaltermodul 7 befestigt. Das Schaltermodul 7 dient beispielsweise zur Aufnahme eines Winkelsensors oder zur Lagerung von Schalthebeln. Dazu ist es notwendig, dass das Schaltermodul 7 gegenüber der Drehbewegung des Lenkrades bzw. der Lenkspindel 2 unbeweglich gehalten ist.

Das Schaltermodul 7 ist in den Fig. 1 und 2 mit seiner Zentriereinrichtung 8 dargestellt. Die Zentriereinrichtung 8 umfasst einen Stator 9, der als Hohlzylinder ausgebildet ist und dessen Innendurchmesser ist auf den Außendurchmesser des inneren Mantelrohrs 3 abgestimmt ist.

An dem zur Lenkradnabe 4 weisenden Ende 10 der Zentriereinrichtung 8 ist ein Außenring 11 eines Axiallagers 12 befestigt, das sich mit seinem Innenring 13 auf der Lenkspindel 2 abstützt, so dass bei drehender Lenkspindel 2 der Stator 9 unbeweglich bleibt.

In dem Stator 9 sind Klemmbacken 14 vorgesehen, die sich über den Umfang des Mantelrohrs 3 verteilen und die mit einem winkelförmigen Auflager 15 an der vorderen Stirnseite 16 des Mantelrohrs 3 anliegen. Die Klemmbacken 14 sind mit einem Ende 17 über Federelemente 18 an dem Stator 9 derart gelagert, dass bei Einwirkung einer axialen Kraft gemäß Pfeil F auf den Stator 9 über die in dem Stator 9 eingelassenen Federelemente 18 die Kraft F in die Klemmbacken 14 eingeleitet wird. Durch das winkelförmige Auflager 15 werden die Klemmbacken 14 gleichmäßig über den Umfang des Mantelrohrs 3 angezogen, so dass eine Zentrierung aller Klemmbacken 14 über den Umfang des Mantelrohrs 3 erfolgt.

Wie insbesondere aus der Detaildarstellung in Fig. 1b hervorgeht, verläuft die dem Stator 9 zugewandte Fläche 14a der Klemmbacke 14 schräg bezüglich der Längsachse L der Lenkspindel 2, so dass der gegenläufig zur Klemmbacke 14 bewegte Stator 9 eine Anlage der Klemmbacke 14 an das Mantelrohr 3 bewirkt. Diese Wirkung wird verstärkt, wenn die Innenfläche 9a des Stators 9 parallel zur schrägen Fläche 14a der Klemmbacke 14 verläuft. An der dem Mantelrohr 3 zugewandten Fläche 14b ist eine Erhebung 14c vorgesehen, die sich -je weiter der Stator 9 gemäß Pfeilrichtung F vorgetrieben wird- durch die Anlage der schrägen Flächen 9a und 14a an das Mantelrohr 3 presst und dadurch eine selbsttätige Zentrierung des gesamten Schaltermoduls 7 bewirkt.

Für eine tangentiale Sicherung des Schaltermoduls 7 ist in der Innenwand 19 des Stators 9 eine Biegefeder 20 befestigt. Korrespondierend dazu ist, wie aus den Fig. 3a und 3b hervorgeht, in dem Mantelrohr 3 eine Aussparung 21 vorgesehen.

Die Biegefeder 20 ist im Mittelbereich konkav ausgebildet, so dass sich die Biegefeder 20 selbsttätig in der Aussparung 21 zentriert, um keine Toleranzen in der radialen Verdrehung des Schaltermoduls 7 zuzulassen. Bei entsprechender Vorspannung der Biegefeder 21 tritt diese immer soweit durch die Aussparung, bis sie mit ihren Flanken 24 an den Rändern 25 der Aussparung 21 anliegt.

An der Unterseite der Biegefeder 20 ist ein Kontrollpin 22 befestigt, der in einer Verkleidung 23 der Lenksäulenanordnung 1 geführt ist. Je nach Position der Biegefeder 20 ragt der Kontrollpin 22 durch die Verkleidung 23 hindurch oder schließt mit der Verkleidung 23 bündig ab, so dass durch visuelle Kontrolle die korrekte Lage der Biegefeder 20 in der Aussparung 23 festgestellt werden kann.

Die Montage des Schaltermoduls 7 erfolgt folgendermaßen:

Das Schaltermodul 7 wird koaxial auf das Mantelrohr 3 aufgesteckt bis die Biegefeder 20 mit der Aussparung 21 in Eingriff kommt. Anschließend wird das Lenkrad mit der Lenkradnabe 4 auf das vordere Ende 6 der Lenkspindel 2 montiert. Das Lenkrad kann beispielsweise über einen Blockzahn der geraden Außenverzahnung der Lenkspindel 2, der mit einem freigeräumten Zahn der Innenverzahnung der Lenkradnabe 4 korrespondiert, zur Lenkspindel ausgerichtet werden. Durch die eindeutige radiale Ausrichtung zwischen Lenkrad, Lenkspindel und Schaltermodul 7 wird ein am Lenkrad vorgesehener Kontaktstecker immer montagesicher in einen Stecker des Schaltermoduls 7 eingreifen. Das Lenkrad wird mittels einer koaxial zur Längsachse L der Lenkspindel 2 angeordneten, die Lenkradnabe 4 durchsetzenden Lenkradschraube (nicht dargestellt) mit einer definierten Kraft F angezogen. Diese Kraft F bewirkt, dass über das Axiallager 12 der Stator 9 des Schaltermoduls 7 beaufschlagt wird und eine Einleitung der Kraft F auf die Klemmbacken 14 erfolgt. Die dadurch auf das Auflager 15 der Klemmbacken 14 wirkende Kraft sowie das Zusammenwirken der Schrägflächen zwischen Klemmbacken 14 in Stator 9 ermöglicht eine selbsttätige Zentrierung und radiale Verspannung der Klemmbacken 14 auf das Mantelrohr 3, so dass das Schaltermodul axial gesichert ist. Gleichzeitig mit dem Anziehen des Schaltermoduls 7 in axialer Richtung wird die Biegefeder 20 in der Aussparung 21 zentriert, so dass eine radiale Sicherung erfolgt. Der Kontrollpin 22 bewegt sich, sobald die Biegefeder 2 in die Aussparung 21 eintritt, von einer erhabenen über die Verkleidung 23 überstehenden Position in eine abgesenkte Position. Der Monteur kann somit kontrollieren, ob das Schaltermodul 7 ordnungsgemäß mit der Biegefeder 20 in der Aussparung 21 verrastet. Nach der Montage des Lenkrads bzw. Schaltermoduls 7 erfolgt die Verkabelung eines im Lenkrad untergebrachten Airbags.

Die Anzahl der Klemmbacken 14 kann frei gewählt werden, wobei 3 Klemmbacken ausreichen, um das Schaltermodul 7 auf dem Mantelrohr 3 axial zu sichern. Jeder Klemmbacke 14 sollte ein Federelement 15 zugeordnet sein. Für die radiale Sicherung können auch mehrere Biegefedern 20 vorgesehen sein.

## Patentansprüche

1. Lenksäulenanordnung mit einer drehbeweglich in einem Mantelrohr gelagerten Lenkspindel und einem gegenüber der Drehbewegung der Lenkspindel unbeweglich gehaltenen Schaltermodul, das auf dem Mantelrohr radial und axial festgelegt ist, wobei sich das Schaltermodul auf einem auf der Lenkspindel angeordneten Lager abstützt,
**dadurch gekennzeichnet,**
**dass** das Schaltermodul (7) eine Zentriereinrichtung (8) umfasst, die bei Einwirkung einer koaxial zur Längsachse (L) der Lenkspindel (2) gerichteten Kraft (F) das Schaltermodul (7) auf dem Mantelrohr (3) festlegt und radial verspannt.

2. Lenksäulenanordnung nach Anspruch 1,
**dadurch gekennzeichnet,**
**dass** die Zentriereinrichtung (8) einen Stator (9) und Klemmbacken (14) umfasst.

3. Lenksäulenanordnung nach Anspruch 2,
**dadurch gekennzeichnet,**
**dass** der Stator (9) mit dem Lager (12) verbunden ist.

4. Lenksäulenanordnung nach Anspruch 2 oder 3,
**dadurch gekennzeichnet,**
**dass** der Stator (9) über ein Federelement (18) mit jeder Klemmbacke (14) verbunden ist.

5. Lenksäulenanordnung nach Anspruch 4,
**dadurch gekennzeichnet,**
**dass** jede Klemmbacke (14) mit einem Auflager (15) an dem Mantelrohr (3) aufliegt.

6. Lenksäulenanordnung nach Anspruch 5,
**dadurch gekennzeichnet,**
**dass** die dem Stator (9) zugewandte Fläche (14a) der Klemmbacke (14) schräg bezüglich der Längsachse (L) der Lenkspindel (2) verläuft.

7. Lenksäulenanordnung nach Anspruch 6,
**dadurch gekennzeichnet,**
**dass** die Innenfläche (9a) des Stators (9) parallel zur schrägen Fläche (14a) der Klemmbacke (14) verläuft.

8. Lenksäulenanordnung nach Anspruch 6 oder 7,
**dadurch gekennzeichnet,**
**dass** an der dem Mantelrohr (3) zugewandten Fläche (14b) der Klemmbacke (14) eine Erhebung (14c) absteht.

9. Lenksäulenanordnung nach Anspruch 1,
**dadurch gekennzeichnet,**
**dass** die axiale Kraft (F) mittels einer Lenkradschraube aufbringbar ist.

10. Lenksäulenanordnung nach Anspruch 1,
**dadurch gekennzeichnet,**
**dass** eine Biegefeder (20) am Stator (9) vorgesehen ist, die in eine Aussparung (21) des Mantelrohrs (3) eingreift.

## Claims

1. Steering column arrangement having a steering spindle which is mounted in a casing tube so as to be rotationally movable, and having a switch module which is held immovably with respect to the rotational movement of the steering spindle and is fixed radially and axially on the casing tube, the switch module being supported on a bearing which is arranged on the steering spindle, **characterized in that** the switch module (7) comprises a centring device (8) which, under the action of a force (F) which is oriented coaxially with respect to the longitudinal axis (L) of the steering spindle (2), fixes the switch module (7) on the casing tube (3) and clamps it radially.

2. Steering column arrangement according to Claim 1, **characterized in that** the centring device (8) comprises a stator (9) and clamping jaws (14).

3. Steering column arrangement according to Claim 2, **characterized in that** the stator (9) is connected to the bearing (12).

4. Steering column arrangement according to Claim 2 or 3, **characterized in that** the stator (9) is connected to each clamping jaw (14) via a spring element (18).

5. Steering column arrangement according to Claim 4, **characterized in that** each clamping jaw (14) is in contact with the casing tube (3) by way of a support (15).

6. Steering column arrangement according to Claim 5, **characterized in that that** face (14a) of the clamping jaw (14) which faces the stator (9) extends obliquely with regard to the longitudinal axis (L) of the steering spindle (2).

7. Steering column arrangement according to Claim 6, **characterized in that** the inner face (9a) of the stator (9) extends parallel to the oblique face (14a) of the clamping jaw (14).

8. Steering column arrangement according to Claim 6 or 7, **characterized in that** an elevation (14c) protrudes from that face (14b) of the clamping jaw (14) which faces the casing tube (3).

9. Steering column arrangement according to Claim 1, **characterized in that** the axial force (F) can be applied by means of a steering wheel bolt.

10. Steering column arrangement according to Claim 1, **characterized in that** a leaf spring (20) which engages in a cut-out (21) of the casing tube (3) is provided on the stator (9).

## Revendications

1. Ensemble de colonne de direction avec un arbre de direction logé dans un fourreau et libre en rotation, et un module de commutateur maintenu immobile relativement à la rotation de l'arbre de direction, axialement et radialement fixé sur le fourreau, le module de commutateur s'appuyant sur un palier disposé sur l'arbre de direction,
**caractérisé en ce que**
le module de commutateur (7) comprend un dispositif de centrage (8) fixant et serrant radialement le module de commutateur (7) sur le fourreau (3) sous l'action d'une force (F) dirigée coaxialement à l'axe longitudinal (L) de l'arbre de direction (2).

2. Ensemble de colonne de direction selon la revendication 1,
**caractérisé en ce que**
le dispositif de centrage (8) comprend un stator (9) et des mâchoires de serrage (14).

3. Ensemble de colonne de direction selon la revendication 2,
**caractérisé en ce que**
le stator (9) est raccordé au palier (12).

4. Ensemble de colonne de direction selon la revendication 2 ou 3,
**caractérisé en ce que**
le stator (9) est raccordé à chaque mâchoire de serrage (14) par un élément à ressort (18).

5. Ensemble de colonne de direction selon la revendication 4,
**caractérisé en ce que**
chaque mâchoire de serrage (14) repose par un appui (15) contre le fourreau (3).

6. Ensemble de colonne de direction selon la revendication 5,
**caractérisé en ce que**
la surface (14a) de la mâchoire de serrage (14) opposée au stator (9) est inclinée par rapport à l'axe longitudinal (L) de l'arbre de direction (2).

7. Ensemble de colonne de direction selon la revendication 6,
**caractérisé en ce que**
la surface intérieure (9a) du stator (9) est parallèle à la surface inclinée (14a) de la mâchoire de serrage (14).

8. Ensemble de colonne de direction selon la revendication 6 ou 7,
**caractérisé en ce que**
la surface (14b) de la mâchoire de serrage (14) opposée au fourreau (3) présente une saillie (14c).

9. Ensemble de colonne de direction selon la revendication 1,
**caractérisé en ce que**
la force axiale (F) est applicable au moyen d'une vis de volant.

10. Ensemble de colonne de direction selon la revendication 1,
**caractérisé en ce qu'**
un ressort de flexion (20) est prévu sur le stator (9) et s'engage dans une ouverture (21) du fourreau (3).
